Europäisches Patentamt

(19) European Patent Office

Office européen des brevets

(11) Numéro de publication: **0 022 294**
**B1**

(12) **FASCICULE DE BREVET EUROPEEN**

(45) Date de publication du fascicule du brevet: **23.03.83**

(51) Int. Cl.³: **G 21 C 17/06**

(21) Numéro de dépôt: **80200622.1**

(22) Date de dépôt: **01.07.80**

(54) **Méthode et installation de localisation d'un barreau fuyard d'un assemblage de combustible nucléaire.**

(30) Priorité: **06.07.79 FR 7917579**

(43) Date de publication de la demande:
**14.01.81 Bulletin 81/2**

(45) Mention de la délivrance du brevet:
**23.03.83 Bulletin 83/12**

(84) Etats contractants désignés:
**BE CH DE FR GB IT LI NL SE**

(56) Documents cités:
**DE - A - 2 610 046**
**FR - A - 1 383 186**
**FR - A - 2 085 843**
**FR - A - 2 302 572**
**FR - A - 2 389 202**
**GB - A - 1 499 113**
**US - A - 3 663 363**

**La rapport EUR 5289e de G. ADILETTA et al.:**
**"Investigations on radioactive fission product**
**correlations: Gamma Spectrometry**
**measurements on spent fuel assemblies of the**
**Garigliano reactor", 1974**

(73) Titulaire: **"Centre d'Etude de l'Energie Nucléaire",**
**"C.E.N."**
**Avenue Plasky 144**
**Schaerbeek B-1040 Bruxelles (BE)**

(72) Inventeur: **Leenders, Léon**
**Pettenlaan, 3**
**Mol (BE)**

(74) Mandataire: **Pirson, Jean et al,**
**C/O Bureau GEVERS S.A. 7, rue de Livourne**
**B-1050 Brussels (BE)**

(56) Documents cités:
**NUCLEAR INSTRUMENTS AND METHODS, vol.**
**154, no. 1, 1978, pages 41—51 F. MICHEL:**
**"Recherche non destructive de distributions**
**radiales de nucleides dans un combustible**
**nucléaire en cours d'irradiation par scrutation**
**gamma transversale"**

Courier Press, Leamington Spa, England.

## Méthode et installation de localisation d'un barreau fuyard d'un assemblage de combustible nucléaire

La présente invention est relative à une méthode de localisation d'un barreau fuyard au sein d'un assemblage, reconnu fuyard, de combustible nucléaire.

Le combustible nucléaire se trouve généralement sous la forme de tubes étanches comprenant un empilement de pastilles et un ou plusieurs plénums destinés à recueillir les produits de fission qui s'échappent des pastilles pendant le fonctionnement du réacteur nucléaire.

Ces tubes, dénommés "barreaux" dans la présente description, sont assemblés en grappe suivant un réseau régulier de géométrie carrée ou triangulaire p.e., le tout formant un assemblage de barreaux.

En régime de production, le réacteur nucléaire est arrêté régulièrement pour assurer le déchargement d'une partie des assemblages, les plus usés, et leur remplacement par des assemblages frais.

Pour des causes diverses, certains barreaux peuvent perdre leur étanchéité en cours de fonctionnement du réacteur. Ils laissent alors échapper des produits de fission radioactifs font l'accumulation dans le circuit primaire de refroidissement du réacteur rendrait l'accès de ce dernier de plus en plus difficile.

Ceci est une des raisons pour laquelle les exploitants de centrales nucléaires procèdent à un examen des assemblages au moment du déchargement du réacteur, notamment quand la radioactivé de leur circuit primaire dépasse certaines normes préétablies. Par cet examen, ils séparent les assemblages fuyards des assemblages sains. Par "assemblages fuyards" il y a donc lieu d'entendre les assemblages susdits dont au moins un barreau ne présente plus l'étanchéité requise.

Des procédés de ressuage dits de "wet sipping" ou de "dry sipping" sont généralement utilisés pour effectuer un tel examen. Ces procédés sont bien connus (voir notamment le brevet français FR—A—2.389.202 et le brevet aux E.U.A. US—A—4.147.587).

L'assemblage examiné est placé dans des conditions telles que la contamination, par les produits de fission réactifs, de l'eau ou d'un gaz ayant été en contact direct avec les barreaux puisse être mesurée, soit en faisant passer cette eau ou ce gaz devant un détecteur de rayonnements, soit en extrayant des échantillons de gaz ou d'eau dans lesquels on mesure la radioactivité.

Le plus souvent, les assemblages fuyards, même s'ils ne sont pas complètement usés, ne sont pas rechargés dans le réacteur nucléaire. Ainsi, l'existence d'un barreau fuyard peut pénaliser tout un assemblage, soit environ 300 barreaux pour un réacteur du type PWR ("pressured water reactor"), environ 50 barreaux pour un réacteur du type BWR ("boiling water reactor") et environ 200 barreaux pour un réacteur du type FBR ("Fast Breeder Reactor").

La présence de tels barreaux fuyards dans certains assemblages a donc une incidence financière importante sur les frais d'exploitation d'une centrale nucléaire.

Un autre problème, moins lourd financièrement peut-être, mais auquel des contraintes de sécurité de plus en plus lourdes seront associées à l'avenir, est le transport d'assemblages fuyards et leur acceptation dans des usines de retraitement. Ce problème sera d'autant plus crucial que les assemblages seront stockés longtemps avant de pouvoir être acceptés par une telle usine de retraitement.

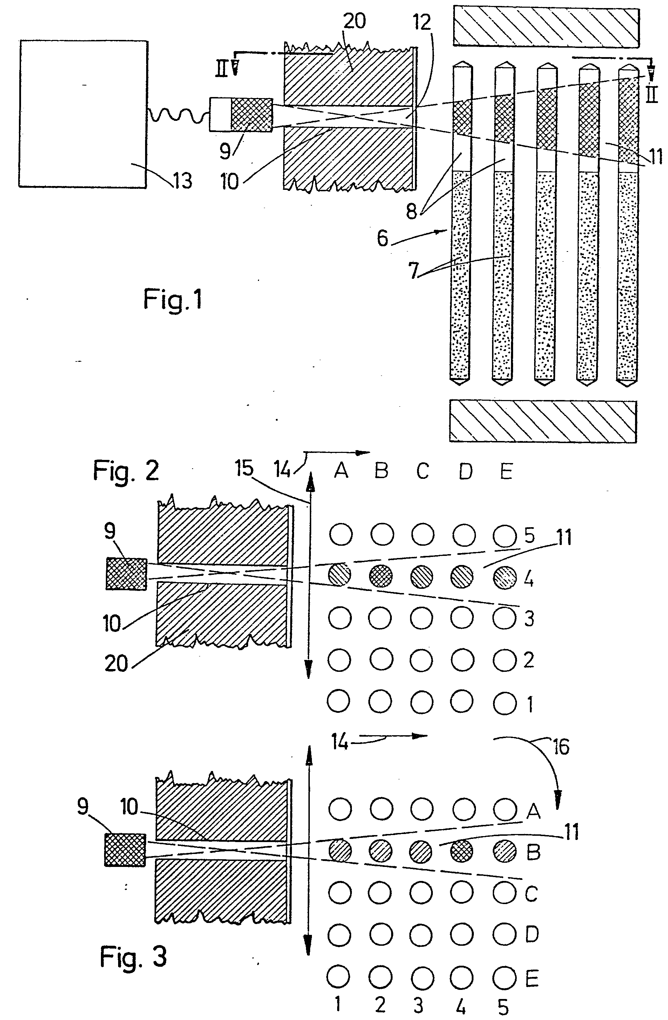

Les publications FR—A—1.383.186, GB—A—1.499.113, "Nuclear Instruments and Methods", vol. 154, no. 1, 1978, pages 41—51, F. Michel: "Recherche non destructive de distributions radiales de nucléides dans un combustible nucléaire en cours d'irradiation par scrutation gamma transversale", page 42, colonne de droite, alinéa 5; figure 2 et "Nuclear Technology", vol. 29, no. 1, avril 1976, pages 113—123, G. Farny et al: "In-pile gamma-ray spectrometry to follow OSIRIS irradiations", figure 2, concernent l'examen d'un seul barreau séparé et non l'examen de barreaux dans un assemblage même.

La publication FR—A—2.389.202 se rapporte à l'identification d'un assemblage fuyard en faisant une mesure globale de la radioactivité de l'assemblage. On ne localise donc pas le ou les barreaux fuyards.

La publication FR—A—2.085.843 concerne l'examen des quatre barreaux de coin d'un assemblage et ne permet pas une recherche systèmatique de barreaux fuyards.

Les publications FR—A—2.302.572 et DE—A—2.610.046 décrivent la détection de barreaux fuyards par un procédé de marquage isotopique des barreaux individuels; outre la complexité et le coût du marquage, une telle détection nécessite un contrôle continu en période d'exploitation du réacteur. Par ailleurs, cette détection devient imprécise si deux ou plus de fuites se produisent simultanément.

Un des buts essentiels de la présente invention est de présenter une méthode permettant de remédier aux inconvénients décrits sommairement ci-dessus.

A cet effet, suivant l'invention, pour l'examen d'un barreau déterminé $(B_4)$ d'un assemblage 6, on mesure la radioactivité d'au moins deux rangées de barreaux (B et 4) s'étendant suivant des directions distinctes et contenant chacune ce barreau $(B_4)$ et on compare la radioactivité totale suivant chacune de ces directions avec la radioactivité enregistrée suivant des rangées comparables, du point de vue disposition et contenu des barreaux, ne contenant pas de barreau fuyard, au sein du même assemblage ou d'un assemblage de référence.

Suivant une forme de réalisation préférée de l'invention, on mesure la radioactivité des produits de fission accumulés dans les ou les plénums des barreaux. Avantageusement, on mesure le rayonnement-$\gamma$ émis par ces produits de fission, mais, suivant l'invention, la méthode peut s'appliquer également en cas d'addition de traceurs radioactifs gazeux; dans ce cas, c'est le rayonnement-$\gamma$ émis par ces traceurs qui est mesuré.

Cette dernière méthode est généralement appliquée au niveau d'un seul barreau (brevet britannique GB—A—1.499.113 et brevet belge BE—A—640.220).

L'invention concerne également une installation pour la mise en oeuvre de la méthode susdite qui comprend au moins un détecteur de radioactivité disposé derrière un collimateur tel que seuls les plénums de barreaux se situent dans la zone de vision du détecteur.

Suivant une forme de réalisation particulière de l'installation suivant l'invention, le détecteur et l'assemblage sont montés de manière à pouvoir se déplacer l'un par rapport à l'autre, suivant une direction transversale à l'axe des barreaux.

D'autres détails et particularités de l'invention ressortiront de la description donnée ci-après, à titre d'exemples non limitatifs, avec référence aux dessins annexés, de quelques formes de réalisation particulières du procédé et de l'installation suivant l'invention pour la localisation de barreaux fuyards dans un assemblage de combustible nucléaire.

La figure 1 est une vue en élévation d'une représentation schématique d'une forme de réalisation particulière d'une méthode et d'une installation correspondante pour la localisation d'un barreaux fuyard dans un assemblage de combustible nucléaire.

La figure 2 est une vue en plan schématique suivant la ligne II—II de la figure 1.

La figure 3 est également une vue en plan schématique dans laquelle cependant l'assemblage des barreaux a subi une rotation d'un angle de 90° autour d'un axe vertical.

La figure 4 est une représentation graphique de l'activité-$\gamma$ de deux séries de rangées perpendiculaires l'une à l'autre de barreaux d'un assemblage.

La figure 5 est une autre représentation graphique de l'activité-$\gamma$ de deux séries de rangées de barreaux perpendicularies l'une à l'autre.

La figure 6 est une vue schématique, en coupe verticale, avec brisures partielles, d'une forme de réalisation particulière d'une installation pour la localisation de barreaux fuyards dans un assemblage de combustible nucléaire.

Dans les différentes figures, les mêmes chiffres de référence désignent des éléments analogues ou identiques.

D'une façon générale, la méthode de localisation suivant l'invention d'un barreau fuyard dans un assemblage de combustible nucléaire consiste à mesurer pour chacun des barreaux de cet assemblage, la radioactivité, notamment l'activité-$\gamma$, d'au moins deux rangées distinctes de barreaux de cet assemblage, dans lesquels le barreau considéré se trouve, et à localiser un barreau fuyard éventuel par la détection d'une variation de ladite radioactivité dans les rangées examinées où ce barreau se trouve, par rapport à la radioactivité d'une rangée identique de barreaux non fuyards.

Suivant une forme particulière de l'invention, on peut avantageusement utiliser la variation du rapport de deux ou plusieurs produits radioactifs (produits de fission, produits d'activation ou traceurs) pour localiser les barreaux fuyards.

Plus particulièrement, on mesure la radioactivité des produits de fission, d'activation ou traceurs radioactifs présents au niveau du ou des plénums des barreaux, des derniers se trouvant sout dans une cuve de désactivation contenant un réfrigérant (eau, sodium,...) soit dans une cellule blindée.

Les figures 1 à 5 permettent d'illustrer une forme de réalisation particulière de cette méthode.

La figure 1 montre, schématiquement, un assemblage 6 de cinq rangées, A, B, C, D et E de barreaux contenant une matière fissile 7 surmonté d'un plénum 8 dans lequel sont recueillis ces produits de fission qui s'échappent de la matière fissile pendant le fonctionnement d'une réacteur nucléaire.

Ces barreaux sont assemblés en grappe suivant un réseau régulier de géométrie carrée, les moyens d'assemblage n'étant cependant pas représentés aux figures.

Parmi les produits de fission accumulés dans le plénum, certains sont radioactifs et émettent des rayonnements-$\gamma$.

Ceux d'énergies élevée, par exemple supérieures à 500 keV, traversent sans peine les matériaux de structure de l'assemblage au niveau des plénums 8.

Un détecteur de rayonnements-$\gamma$ 9, dûment protégé contre les rayonnements environnants, est disposé derrière un collimateur 10 de dimensions telles que seuls les plénums d'une rangée à la fois de barreaux peuvent se trouver dans le champ de vision 11 du détecteur 9. Ce champ de vision ou de détection 11 présente une allure pyramidale étalée surtout suivant l'axe des barreaux, comme montré clairement aux figures 1 à 3. Ainsi, la perte de sensibilité de mesure des rayonnements-$\gamma$, due à l'éloignement de certains barreaux, est au moins partiellement compensée par cette forme pyramidale du faisceau de rayons captés par le détecteur et formant la zone de vision 11 susdite. En effet, plus un barreau déterminé est éloigné, plus grande est la section de plénum se trouvant dans la zone de vision 11.

Avantageusement, on choisit l'angle solide du collimateur de manière à compenser approximativement les pertes par absorption-$\gamma$. On pourrait ainsi régler, à cet égard, la dimension de la fente 12 du collimateur 10 suivant l'axe des barres.

Pour ce qui concerne la largeur de cette fente 12, elle est imposée par l'activité à mesurer et la précision statistique. Elle sera de préférence nettement inférieure au diamètre extérieur des barreaux afin d'éliminer les effets de bords, tels que flèches des barreaux, centrage d'un ressort non représenté, etc.

Le détecteur de rayonnements-$\gamma$ 9 comprend par exemple un cristal NaI, Ge(Li), Ge intrinsèque, Cd . Te, HgI$_2$, ... Il est raccordé à un appareil de mesure 13 qui est par exemple formé d'un appareillage d'enregistrement de l'activité totale ou d'un appareillage de discrimination des rayonnements-$\gamma$ d'énergies correspondant à des produits de fission bien caractéristiques, par exemple à l'aide d'un monocanal, d'un multicanal, etc. Le choix de la méthode de mesure dépend essentiellement des conditions pratiques de travail, notamment du type d'assemblage, de la durée d'irradiation, du temps de refroidissement, etc.

Les figures 1 à 3 illustrent un exemple pratique de localisation d'un barreau fuyard. Cette méthode consiste à mesurer séparément et successivement l'activité-$\gamma$ des rangées 1 à 5 de l'assemblage 6 s'étendant suivant les sens de la flèche 14 en soumettant par exemple cet assemblage à une translation dans le sens des flèches 15 de manière à ce que les plénums 8 des barreaux de chacune des ces rangées 1 à 5 passent dans la zone de vision 11 du collimateur 10.

Ensuite, on fait tourner l'assemblage de barreaux 6 d'un angle de 90° autour d'une axe parallèle aux barreaux comme indiqué par la flèche 16 sur la figure 3, de manière à ce que les barreaux occupent la position relative par rapport au collimateur 10, comme indiqué sur la figure 3.

D'une manière analogue, on mesure à nouveau l'activité-$\gamma$ de chacune des rangées A jusqu'à E s'étendant dans le sens de la flèche 14 en soumettant l'assemblage des barreaux 6 à une translation dans le sens des flèches 15 en regard du collimateur 10.

Cette translation peut être continue ou pas à pas.

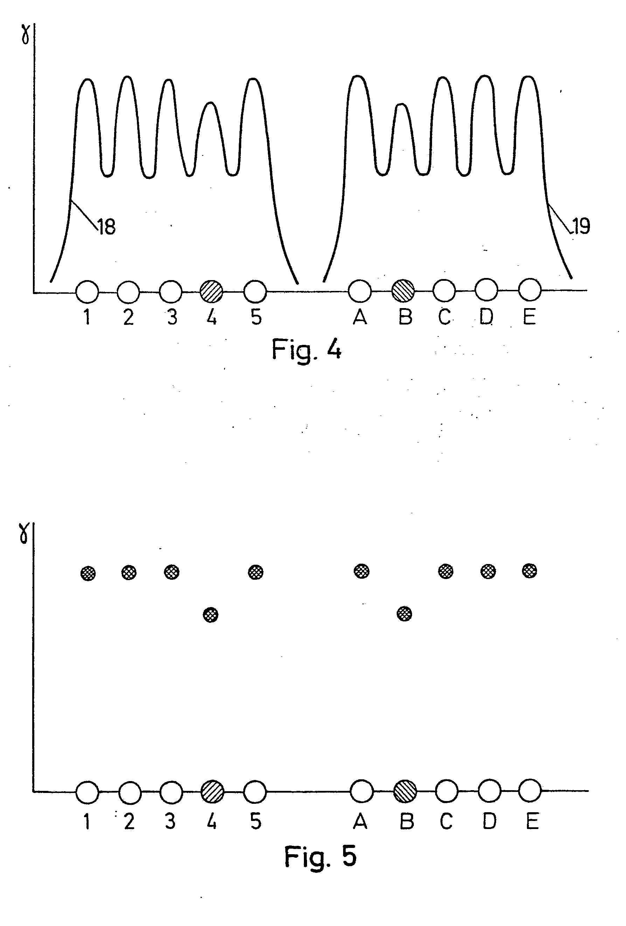

Dans le cas d'une translation continue, la mesure de l'activité-$\gamma$ peut être portée en graphique comme montré à la figure 4. En ordonnée est donnée l'activité-$\gamma$, tandis qu'en abscisse on montre le déplacement de l'assemblage de barreaux en regard du collimateur 10.

Pour la clarté, on a représenté à l'abscisse les repairs des rangées 1 à 5 et A à E.

Le graphique 18 montre la mesure effectuée comme illustré à la figure 2, tandis que le graphique 19 montre la mesure effectuée, comme illustré par la figure 3.

Si on suppose par exemple que l'assemblage comprend un seul barreau fuyard se trouvant dans la position B4, les activités-$\gamma$ des rangées 4 et B, qui contiennent ce barreau, indiqueront une variation de l'activité-$\gamma$, qui est par exemple comme indiqué sur la figure 4, une diminution d'activité-$\gamma$. Par ailleurs, par calcul, on peut également déterminer une variation dans le rapport d'un ou plusieurs produits radioactifs.

Les mesures d'activité-$\gamma$ effectuées en cas d'une translation pas à pas ont été montées par le graphique de la figure 5 qui permet également de localiser immédiatement le barreau fuyard B4.

En cas d'une translation pas à pas, la distance entre deux pas successifs doit être sensiblement égale à celle séparant les plans axiaux de deux rangées consécutives de barreaux dans l'assemblage.

Dans le cas de la translation et de la rotation d'un assemblage de barreaux 6, le détecteur peut être fixe et, dans ce cas, le collimateur peut être pratiqué dans la paroi 20 de la cuve de désactivation ou de stockage ou de la cellule blindée, qui contient cet assemblage, au niveau des plénums 8 des barreaux. Cette paroi constitue alores l'essentiel de la protection-$\gamma$ du détecteur 9.

Toutefois, au cas où par exemple le collimateur ne pourrait pas être pratiqué dans la paroi pour des raisons pratiques, comme variante de la méthode de localisation d'un barreau fuyard suivant l'invention, on pourrait prévoir la translation de l'ensemble formé par le collimateur 10, le détecteur 9 et une protection spéciale du détecteur contre des rayonnements environnants. Dans ce cas, cet ensemble peut par exemple coopérer avec un mécanisme non représenté aux figures qui permet la translation de cet ensemble à l'intérieur de la cuve de désactivation ou de stockage ou de la cellule blindée, par exemple le long de la face intérieure de la paroi 20 de cette dernière. Il faut donc, dans le cas d'un réseau carré, comme montré aux figures 2 et 3, que ledit ensemble puisse subir deux translations à angle droit dans un sens horizontal du côté extérieur de l'assemblage des barreaux.

Cet ensemble pourrait même être immergé dans le réfrigérant contenu dans la cuve précitée.

Toutefois, on pourrait combiner la translation de l'assemblage et de l'ensemble détecteur-collimateur.

Dans une telle forme de réalisation, le déplacement de l'assemblage de barreaux pourrait par exemple se limiter à une simple rotation autour d'un axe parallèle aux barreaux et la translation d'un ensemble détecteur-collimateur pourrait se limiter à une seule direction.

Dans une autre forme de réalisation, on pourrait prévoir une rotation coordonnée de l'assemblage et de l'ensemble détecteur-collimateur.

Si l'ensemble des barreaux présente une géométrie triangulaire, la rotation susdite de cet assemblage pourrait se limiter à 60° au lieu de 90°, tandis qu'en cas d'un assemblage fixe, l'ange formé entre les deux translations de l'ensemble mobile détecteur-collimateur devrait également être de 60°.

Pour les assemblages de gros volume, la contribution d'une barreau à l'activité d'une rangée est réduite progressivement avec l'éloignement par suite de l'absorption-$\gamma$ dans les matériaux de structure et éventuellement dans le réfrigérant. La mesure suivant quatre faces pour un assemblage de géométrie carrée on suivant six faces pour un assemblage de géométrie triangulaire permet de confirmer les résultats obtenus sur deux faces, puisqu'un barreau éloigné par rapport à une face est rapproché par rapport à la face opposée.

Par ailleurs, il peut être avantageux d'effectuer la mesure suivant les rangées parallèles aux diagonales pour un assemblage de géométrie carrée.

Toutefois, comme déjà signalé ci-dessus, la perte de sensibilité due à l'éloignement d'un barreau déterminé peut être compensée, du moins partiellement, par la forme pyramidale du champ de vision du collimateur.

Si l'absorption-$\gamma$ dans le réfrigérant conduit à une réduction trop grande de la contribution des derniers barreaux, la réductuon de la sensibilité due à cette absorption pourrait être éliminée en évacuant momentanément le réfrigérant de la zone des barreaux devant être soumise à la mesure de la radioactivité, c'est-à-dire des plénums 8.

Par ailleurs, si la perte de produits de fission du barreau fuyard était insuffisante pour que la localisation soit indubitable, on pourrait prévoir un échauffement de l'assemblage, lors de la mesure de l'activité ou entre deux mesures de l'activité, de manière à produire une fuite plus importante, donc plus aisée à localiser.

Il y a encore lieu de remarquer que l'exemple de localisation représenté graphiquement aux figures 4 et 5 considère un assemblage simple, dont les barreaux sont épuisés uniformément. En pratique cependant, les assemblages peuvent contenir des tubes vides, tels que des barres de contrôle RCC, une instrumentation en pile, etc., qui constituent des irrégularités au départ. De plus, les barreaux ne sont généralement pas épuisés uniformément, ce qui contribue, bien entendu, à une répartition inégale des activités.

Pour un type d'assemblage et un réacteur donnés, il existe peu de différence d'un assemblage à l'autre, de sorte que les résultats peuvent être rapportés à un assemblage type, non fuyard, afin d'éliminer l-effet desdites irrégularités. Il est également possible de réduire l'effet desdites irrégularités ou l'effet de l'incertitude de positionnement en rapportant l'activité mesurée à un produit de fission ou d'activation non affecté par la fuite.

Comme déjà signalé ci-dessus, l'invention concerne également une installation pour la localisation d'un barreau fuyard dans un assemblage de combustible nucléaire.

Il résulte déjà des considérations développées ci-dessus, en rapport avec le procédé de localisation d'un tel barreau, qu'une telle installation comprend une enceinte (cuve de stockage ou de désactivation ou cellule blindée) contenant au moins partiellement, un assemblage de barreaux et au moins un détecteur de rayons-$\gamma$ disposé derrière un collimateur de dimensions telles que seuls les plénums des barreaux se situent dans la zone de détection ou de vision du détecteur.

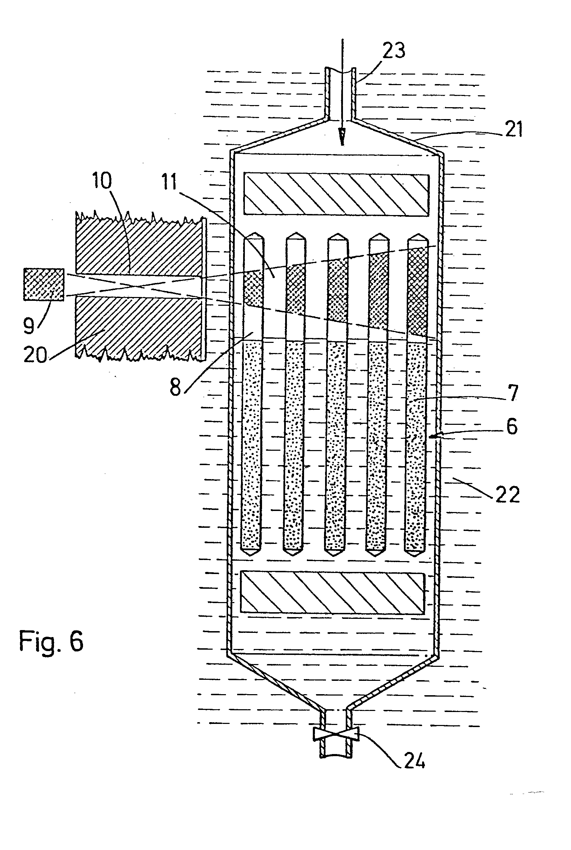

La figure 6 montre une forme de réalisation particulière d'une partie d'une telle installation.

Elle comprend une bouteille 21 pouvant être placée au-dessus de l'assemblage de barreaux 6 et plongée au moins partiellement dans le réfrigérant 22 de la cuve de désactivation ou de stockage, une partie de la protection-$\gamma$ 20 a été représentée là où est prévu le collimateur 10 et le détecteur 9. Cette bouteille est raccordée, par sa partie supérieure, à une source de gaz sous pression, non représentée, par une conduite 23, de manière à permettre de chasser le réfrigérant en dessous de la bouteille jusqu'à un niveau situé en dessous de la zone de vision ou de détection 11, de façon à réduire l'absorption-$\gamma$.

Ceci permettrait une meilleure détection de barreaux fuyards dont la perte de produits de fission est relativement réduite. De plus, par une réduction plus importante du niveau du réfrigérant dans la bouteille, on pourrait obtenir une meilleure détection de barreaux fuyards dont la perte de produits de fission est relativement réduite. L'absence momentanée de réfrigérant au niveau de la matière fissile facilitera l'échauffement-$\gamma$ au sein de l'assemblage ainsi que l'échappement des produits de fission des barreaux fuyards.

Dans une réalisation particulière de l'installation, le même effet pourrait être obtenu par chauffage de l'assemblage.

La fermeture momentanée d'une vanne inférieure 24 et la mise en dépression de la bouteille pourraient encore augmenter l'efficacité de l'échappement des produits de fission.

Il est bient entendu que l'invention n'est pas limitée aux formes de réalisation de la méthode et de l'installation pour la localisation de barreaux fuyards décrites ci-dessus et que bien des variantes pourraient être envisagées sans sortir du cadre du présent brevet.

C'est ainsi qu'on pourrait prévoir plusieurs détecteurs pour un même assemblage de barreaux et un détecteur par rangée dont l'activité est à mesurer. Dans un tel cas, aussi bien les détecteurs que les barreaux pourraient être maintenus immobiles.

Suivant l'invention, cette forme de réalisation à plusieurs détecteurs pourrait être intégrée dans une installation de ressuage citée ci-dessus.

Par ailleurs, il est bien entendu que la méthode, suivant l'invention, n'est pas limitée au seul plénum supérieur tel que donné ci-dessus à titre d'exemple, mais peut s'appliquer aux différents plénums que comprendrait l'assemblage à examiner quels que soient leurs niveaux.

Comme déjà signalé ci-dessus, dans certains cas, on peut mesurer la radioactivité de traceurs introduits dans les barreaux lors de leur fabrication, ceux-ci étant soit radioactifs du départ, notamment pour le contrôle de fabrication, soit activés par l'irradiation aux neutrons.

Avantageusement, les barreaux sont démontables dans les assemblages, de manière à permettre de remplacer aisément les barreaux fuyards.

## Revendications

1. Méthode de localisation d'un barreau fuyard au sein d'un assemblage, reconnu fuyard, de combustible nucléaire, caractérisée en ce que, pour l'examen d'un barreau déterminé ($B_4$) d'un assemblage (6), on mesure la radioactivité d'au moins deux rangées de barreaux (B et 4) s'étendant suivant des directions distinctes et contenant chacune ce barreau ($B_4$) et on compare la radioactivité totale suivant chacune de ces directions avec la radioactivité enregistrée suivant des rangées comparables, du point de vue disposition et contenu des barreaux, ne contenant pas de barreau fuyard, au sein du même assemblage ou d'un assemblage de référence.

2. Méthode suivant la revendication 1, caractérisée en ce qu'on mesure la radioactivité des produits de fission accumulés dans le plénum 8 des barreaux.

3. Méthode suivant la revendication 1, caractérisée en ce qu'on mesure la radioactivité d'un traceur radioactif additionné aux barreaux lors de la fabrication de ces derniers.

4. Méthode suivant la revendication 1, caractérisée en ce qu'on utilise la variation du rapport de deux ou plusieurs produits radioactifs pour localiser les barreaux fuyards.

5. Méthode suivant l'une quelconque des revendications 1 à 4, caractérisée en ce qu'on mesure le rayonnement-$\gamma$ émis.

6. Méthode suivant l'une quelconque des revendications 1 à 5, caractérisée en ce qu'on mesure la radioactivité au niveau des plénums (8) des barreaux.

7. Méthode suivant l'une quelconque des revendications 1 à 6, caractérisée en ce qu'on effectue la mesure de la radioactivité des barreaux d'un assemblage dans une cuve de désactivation ou de stockage, contenant un réfrigérant (22) ou dans une cellule blindée.

8. Méthode suivant l'une quelconque des revendications 1 à 7, caractérisée en ce qu'on évacue le réfrigérant de la zone des barreaux devant être soumise à la mesure de la radioactivité.

9. Méthode suivant l'une quelconque des revendications 1 à 8, caractérisée en ce qu'on fait usage d'assemblages démontables, de manière à permettre de remplacer les barreaux fuyards.

10. Méthode suivant l'une quelconque des revendications 1 à 9, caractérisée en ce qu'elle consiste à soumettre un détecteur de rayonnements (9) et un assemblage de barreaux (6) à un déplacement relatif suivant une direction transversale, de préférence sensiblement perpendiculaire, à celle de l'axe des barreaux de manière à permettre de mesurer, par le détecteur, la radioactivité d'une rangée de barreaux (A, B, C, D, E) à la fois ou de (1, 2, 3, 4, 5) à la fois.

11. Méthode suivant la revendication 10, caractérisée en ce que le déplacement susdit est formé par une translation continue de l'assemblage (6) et/ou du détecteur (9).

12. Méthode suivant la revendication 10, caractérisée en ce que le déplacement susdit est formé par une translation pas à pas d'une distance sensiblement égale à celle séparant les plans axiaux de deux rangées consécutives de barreaux dans l'assemblage, suivant une direction transversale, de préférence perpendiculaire à celle de l'axe des barreaux.

13. Méthode suivant la revendication 10, caractérisée en ce que le déplacement susdit est formé par une rotation coordonnée de l'assemblage (6) de barreaux et du détecteur (9).

14. Méthode suivant l'une quelconque des revendications 1 à 9, caractérisée en ce qu'on utilise un détecteur (9) par rangée de barreaux, ces détecteurs étant alignés avec les barreaux suivant une ou plusieurs faces latérales de l'assemblage (6).

15. Méthode suivant l'une quelconque des revendications 1 à 14, caractérisée en ce qu'on chauffe ou on laisse les barreaux s'échauffer avant la mesure susdite de la radioactivité.

16. Méthode suivant l'une quelconque des revendications 1 à 15, caractérisée en ce qu'on crée un dépression autour des barreaux.

17. Installation pour la localisation d'un barreaux fuyard dans un assemblage (6) de combustible nucléaire, notamment pour la mise en oeuvre du procédé suivant l'une quelconque des revendications 1 à 16, caractérisée en ce qu'elle comprend une cuve (20) contenant un réfrigérant (22), dans laquelle plonge au moins partiellement un assemblage de barreaux, et au moins un détecteur (9) de rayonnements disposé derrière un collimateur (10) de dimensions telles que seuls les plénums (8) de barreaux d'une rangée choisie se situent dans la zone de détection ou de vision (11) du ou des détecteurs (9).

18. Installation suivant la revendication 17, caractérisé en ce que le détecteur (9) et l'assemblage (6) sont montés de manière à pouvoir se déplacer l'un par rapport à l'autre, suivant une direction transversale (15), de préférence perpendiculaire à celle de l'axe des barreaux.

19. Installation suivant l'une ou l'autre des revendications 17 et 18, caractérisée en ce que le collimateur est monté dans la paroi latérale (20) de la cuve ou de la cellule en regard des plénums (8) des barreaux de l'assemblage (6).

20. Installation suivant l'une ou l'autre des revendications 17 et 18, caractérisée en ce que l'ensemble, formé par le détecteur (9) et le collimateur (10), est immergé dans la cuve (20).

21. Installation suivant l'une quelconque des revendications 17 à 20, caractérisée en ce que le collimateur (10) présente, en regard du détecteur (9), une fente (12) dont la largeur est inférieure au diamètre extérieur des barreaux, par exemple de l'ordre de 80% de ce dernier.

22. Installation suivant l'une quelconque des revendications 17 à 21, caractérisée en ce que le collimateur (10) présente en regard du détecteur (9) une fente (12) dont la hauteur est telle qu'elle permet de compenser au moins partiellement la perte de sensibilité de mesure des rayonnements due à l'éloignement de certains barreaux.

23. Installation suivant l'une quelconque des revendications 17 à 22, caractérisée en ce qu'elle comprend une bouteille (21) dans laquelle l'assemblage de barreaux est disposé, cette bouteille (21) étant raccordée à sa partie supérieure à une arrivée de gaz sous pression (23,), de manière à permettre de chasser le réfrigérant (22).

24. Installation suivant la revendication 23, caractérisée en de que la bouteille (21) est ouverte à sa base, peut être placée au-dessus de l'assemblage de barreaux et plonger au moins partiellement dans le réfrigérant (22) de la cuve.

25. Installation suivant la revendication 23, caractérisée en ce que la bouteille (21) est raccordée par sa partie supérieure (23) à une arrivée de gaz sous pression ou à une pompe à vide et est munie à sa partie inférieure d'un moyen de fermeture (24).

**Patentansprüche**

1. Verfahren zum Lokalisieren eines undichten Brennstabes in einem als undicht erkannten Bündel von Kernbrennstoffstäben, dadurch gekennzeichnet, daß man zur Prüfung eines Brennstabes (B4) eines Bündels (6) die Radioaktivität wenigstens zweier Brennstabreihen (B und 4) mißt, die sich nach verschiedenen Richtungen hin erstrecken und jeweils diesen Brennstab (B4) enthalten, und daß man die Gesamtradioaktivität entland jeder dieser Richtungen mit der Radioaktivität vergleicht, die man im Innern desselben oder eines Referenzbündels entlang von Reihen registriert, welche unter dem Gesichtspunkt der Anordnung und des Inhalts der Brennstäbe vergleichbar sind und keinen undichten Brennstab enthalten.

2. Verfahren nach Anspruch 1, dadurch gekennzeichnet, daß man die Radioaktivität der im Sammelraum (8) der Brennstäbe angesammelten Spaltprodukte mißt.

3. Verfahren nach Anspruch 1, dadurch gekennzeichnet, daß man die Radioaktivität eines radioaktiven, den Brennstäben bei ihrer Fertigung zugefügten Leitisotops mißt.

4. Verfahren nach Anspruch 1, dadurch gekennzeichnet, daß man zur Lokalisierung der undichten Brennstäbe die Veränderung des Verhältnisses zweier oder mehrerer radioaktiver Produkte ausnutzt.

5. Verfahren nach einem der Ansprüche 1 bis 4, dadurch gekennzeichnet, daß man die emittierte Gammastrahlung mißt.

6. Verfahren nach einem der Ansprüche 1 bis 5, dadurch gekennzeichnet, daß man die Radioaktivität im Bereich des Sammelraums (8) der Brennstäbe mißt.

7. Verfahren nach einem der Ansprüche 1 bis 6, dadurch gekennzeichnet, daß man die Messung der Radioaktivität der Brennstäbe eines Bündels in einem ein Kühlmittel (22) enthaltenden Abkühloder Lagertank oder in einer gekapselten Zelle vornimmt.

8. Verfahren nach einem der Ansprüche 1 bis 7, dadurch gekennzeichnet, daß man das Kühlmittel aus der der Radioaktivitätsmessung zu unterziehenden Brennstabzone entfernt.

9. Verfahren nach einem der Ansprüche 1 bis 8, dadurch gekennzeichnet, daß man von demontierbaren Bündeln in einer Art und Weise Gebrauch macht, welche eine Ersetzung der undichten Brennstäbe gestattet.

10. Verfahren nach einem der Ansprüche 1 bis 9, dadurch gekennzeichnet, daß man einen Strahlendetektor (9) und ein Brennstabbündel (6) einer Relativverschiebung in einer zur Achse der Brennstäbe transversalen, vorzugsweise im wesentlichen senkrechten Richtung, in einer Art und Weise unterwirft, welche die gleichzeitige Messung der Radioaktivität einer Brennstabreihe (A, B, C, D, E oder 1, 2, 3, 4, 5) durch den Detektor gestattet.

11. Verfahren nach Anspruch 10, dadurch gekennzeichnet, daß die Relativverschiebung durch eine kontinuierliche Translationsbewegung des Bündels (6) und/oder des Detektors (9) ausgeführt wird.

12. Verfahren nach Anspruch 10, dadurch gekennzeichnet, daß die Relativverschiebung durch eine schrittweise Translationsbewegung um eine Entfernung, die im wesentlichen gleich dem Abstand der Axialebenen zweier aufeinander folgender Brennstabreihen im Bündel ist, entlang einer zur Brennstabachse transversalen, Vorzugsweise senkrechten Richtung ausgeführt wird.

13. Verfahren nach Anspruch 10, dadurch gekennzeichnet, daß die Relativverschiebung durch eine koordinierte Rotationsbewegung des Brennstabbündels (6) und des Detektors (9) ausgeführt wird.

14. Verfahren nach einem der Ansprüche 1 bis 9, dadurch gekennzeichnet, daß man einen Detektor (9) je Brennstabreihe benutzt und diese Detektoren mit den Brennstäben entlang einer oder mehrerer Seitenflächen des Bündels (6) ausgerichtet sind.

15. Verfahren nach einem der Ansprüche 1 bis 14, dadurch gekennzeichnet, daß man die Brennstäbe vor der Messung der Radioaktivität erwärmt oder sich erwärmen läßt.

16. Verfahren nach einem der Ansprüche 1 bis 15, dadurch gekennzeichnet, daß man in der Umgebung der Brennstäbe einen Unterdruck erzeugt.

17. Anlage zur Lokalisierung eines undichten Brennstabes in einem Bündel (6) von Kernbrennstoffstäben, insbesondere zur Durchführung des Verfahrens nach einem der Ansprüche 1 bis 16, dadurch gekennzeichnet, daß die folgende Elemente umfaßt: einen ein Kühlmittel (22) umfassenden Tank (20), in den ein Brennstabbündel wenigstens teilweise eintaucht, und wenigstens einen Strahlendetektor (9), welcher hinter einem Kollimator (10) angeordnet ist, dessen Dimensionen so gewählt sind, daß sich lediglich die Sammelräume (8) der Brennstäbe einer ausgewählten Reihe sich in der Erfassungszone (11) des oder der Detektoren (9) befinden.

18. Anlage nach Anspruch 17, dadurch gekennzeichnet, daß der Detektor (9) und das Bündel (6) so angeordnet sind, daß sie sich relative zueinander entland einer Richtung (15) verschieben können, die zur Achse der Brennstäbe transversal, vorzugsweise senkrecht verläuft.

19. Anlage nach Anspruch 17 oder 18, dadurch gekennzeichnet, daß der Kollimator in der Seitenwand (20) des Tanks oder der Zelle gegenüber den Sammelräumen (8) der Brennstäbe des Bündels (6) angeordnet ist.

20. Anlage nach Anspruch 17 oder 18, dadurch gekennzeichnet, daß die von dem Detektor (9) und dem Kollimator (10) gebildete Einheit in dem Tank (20) eingetaucht ist.

21. Anlage nach einem der Ansprüche 17 bis 20, dadurch gekennzeichnet, daß der Kollimator (10) einen dem Detektor (9) gegenüberliegenden Spalt (12) aufweist, dessen Breite kleiner als der Außendurchmesser der Brennstäbe ist und beispielsweise etwa 80% dieses Durchmessers beträgt.

22. Anlage nach einem der Ansprüche 17 bis 21, dadurch gekennzeichnet, daß der Kollimator (10) einen dem Detektor (9) gegenüberliegenden Spalt (12) aufweist, dessen Höhe so bemessen ist, daß eine wenigstens teilweise Kompensation des Verlustes an Strahlenmeßempfindlichkeit aufgrund der Entfernung bestimmter Brennstäbe möglicht ist.

23. Anlage nach einem der Ansprüche 17 bis 22 dadurch gekennzeichnet, daß sie eine Flasche (21) umfaßt, in welcher das Brennstabbündel angeordnet ist, und daß diese Flasche (21) an ihrem oberen Teil mit einem Einlaß für unter Druck stehendes Gas (23) derart verbunden, ist, daß das Kühlmittel (22) austreibbar ist.

24. Anlage nach Anspruch 23, dadurch gekennzeichnet, daß die Flasche (21) an ihrer Unterseite offen ist, über dem Brennstabbündel angebracht werden kann und wenigstens teilweise in das Kühlmittel (22) des Tanks eintauchen kann.

25. Anlage nach Anspruch 23, dadurch gekennzeichnet, daß die Flasche (21) an ihrem oberen Teil (23) mit einem Einlaß für unter druck stehendes Gas oder mit einer Unterdruckpumpe verbunden ist, und daß sie an ihrem unteren Teil ein Verschlußmittel (24) aufweist.

## Claims

1. Method for locating a leading rod inside a nuclear fuel assembly, known to be leaking, characterized in that for investigating a determined rod ($R_4$) from an assembly (6), one measures the radio-activity in at least two rod rows (8 and 4) extending along discrete directions and each containing this rod ($R_4$), and one compares the total radio-activity along each such directions with the radio-activity recorded along comparable rows as regards the arrangement and contents of the rods thereof, that do not contain a leaking rod, inside the same assembly or a reference assembly.

2. Method as defined in claim 1, characterized in that one measures the radio-activity from the fission products accumulated in the rod plenum (8).

3. Method as defined in claim 1, characterized in that one measures the radio-activity from a radio-active tracer added to the rods when manufacturing same.

4. Method as defined in claim 1, characterized in that one uses the change in the ratio between two or a plurality of radio-active products to locate the leaking rods.

5. Method as defined in any one of claims 1 to 4, characterized in that one measures the issuing radiation.

6. Method as defined in any one of claims 1 to 5, characterized in that one measures the radio-activity at the level of the rod plenum (8).

7. Method as defined in any one of claims 1 to 5, characterized in that one performs the measuring of the radio-activity of the rods from an assembly, inside a neutralizing or storage tank containing a coolant (22), or inside a screened cell.

8. Method as defined in any one of claims 1 to 7, characterized in that one discharges the coolant from that rod zone to be subjected to the radio-activity measuring.

9. Method as defined in any one of claims 1 to 8, characterized in that one makes use of dismantable assemblies to allow replacing the leaking rods.

10. Method as defined in any one of claims 1 to 9, which comprises subjecting a radiation sensor (9) and a rod assembly (6) to a relative movement along a cross-wise direction, preferably substantially at right angle, relative to the rod axis to allow measuring with the sensor, the radio-activity from a rod row (A, B, C, D, E) at once, or (1, 2, 3, 4, 5) at once.

11. Method as defined in claim 10, characterized in that said movement is comprised of a continuous translating of the assembly (6) and/or the sensor (9).

12. Method as defined in claim 10, characterized in that said movement is comprised of a stepwise translating over a distance substantially equal to the spacing between the axial planes of two succeeding rod rows in the assembly, along a cross-wise direction, preferably at right angle to the rod axis direction.

13. Method as defined in claim 10, characterized in that said movement is comprised of a coordinated rotating of the assembly (6) of the rods and the sensor (9).

14. Method as defined in any one of claims 1 to 9, characterized in that use is made of one sensor (9) for each rod row, these sensors being aligned with the rods along one or a plurality of side surfaces of the assembly (6).

15. Method as defined in any one of claims 1 to 14, characterized in that one heats or lets the rods get hot before said measuring of the radio-activity.

16. Method as defined in any one of claims 1 to 15, characterized in that one generates an underpressure around the rods.

17. Equipment for the locating of a leaking rod in a nuclear fuel assembly (6), notably for the working of the method as defined in any one of claims 1 to 16, characterized in that it comprises a tank (20) containing a coolant (22) into which dips partly at least a rod assembly, and at least one sensor (9) for radiations arranged behind a collimator (10) with such a size that but the rod plenum (8) from a selected row lie in the sensing zone or viewing zone (11) from the sensor or sensors (9).

18. Equipment as defined in claim 17, characterized in that the sensor (9) and the assembly (6) are so mounted as to be movable relative to one another, along a cross-wise direction (15), preferably at right angle to the rod axis.

19. Equipment as defined in either one of claims 17 and 18, characterized in that the collimator is mounted in the side wall (20) of the tank or cell facing the rod plenum (8) of the assembly (6).

20. Equipment as defined in either one of claims 17 and 18, characterized in that the unit formed by the sensor (9) and the collimator (19), is immersed in the tank (20).

21. Equipment as defined in any one of claims 17 to 20, characterized in that the collimator (10) is provided facing the sensor (9), with a slit (12) the height of which is such as to allow compensating partly at least the sensitivity loss in the radiation measuring due to the distance to some rods.

23. Equipment as defined in any one of claims 17 to 22, characterized in that it comprises a cylinder (21) inside which said rod assembly is arranged, said cylinder (21) being connected at the top thereof to a pressurized gas supply (23) to allow driving the coolant (22) out.

24. Equipment as defined in claim 23, characterized in that the cylinder (21) is open at the bottom thereof, may be arranged above the rod assembly and dip partly at least in the tank coolant (22).

25. Equipment as defined in Claim 23, characterized in that the cylinder (21) is connected with the top thereof (23) to a pressurized gas supply or to a vacuum pump, and it is provided at the bottom thereof with a closing means (24).

Fig.1

Fig. 2

Fig. 3

Fig. 4

Fig. 5

Fig. 6